(19)

**Europäisches Patentamt**
**European Patent Office**
**Office européen des brevets**

(11) **EP 2 357 609 B1**

(12) **EUROPEAN PATENT SPECIFICATION**

(45) Date of publication and mention
of the grant of the patent:
**27.06.2012 Bulletin 2012/26**

(51) Int Cl.:
***G06T 7/00*** *(2006.01)*

(21) Application number: **09306320.4**

(22) Date of filing: **23.12.2009**

(54) **Adaptive hit-or-miss region growing for vessel segmentation in medical imaging**

Adaptives Regionswachstum mit unsicherem Ausgang zur Gefäßsegmentierung bei medizinischer Bildgebung

Croissance adaptative de région par tout ou rien pour la segmentation de vaisseaux dans une imagerie médicale

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(43) Date of publication of application:
**17.08.2011 Bulletin 2011/33**

(73) Proprietor: **Intrasense**
**34000 Montpellier (FR)**

(72) Inventors:
• **Banegas, Frederic**
**34070 Montpellier (FR)**
• **Spuhler, Christoph**
**34000 Montpellier (FR)**

(74) Representative: **Pontet, Bernard**
**Pontet Allano & Associés s.e.l.a.r.l.**
**25, rue Jean Rostand**
**Parc Club Orsay Université**
**91893 Orsay Cedex (FR)**

(56) References cited:
• **NAEGEL ET AL: "Grey-level hit-or-miss transforms-Part I: Unified theory" PATTERN RECOGNITION, ELSEVIER, GB LNKD- DOI: 10.1016/J.PATCOG.2006.06.004, vol. 40, no. 2, 29 October 2006 (2006-10-29), pages 635-647, XP005837138 ISSN: 0031-3203**

• **NAEGEL ET AL: "Grey-level hit-or-miss transforms-part II: Application to angiographic image processing" PATTERN RECOGNITION, ELSEVIER, GB LNKD- DOI:10.1016/J.PATCOG. 2006.06.011, vol. 40, no. 2, 29 October 2006 (2006-10-29), pages 648-658, XP005837139 ISSN: 0031-3203**

• **BOURAOUI B ET AL: "Fully automatic 3D segmentation of coronary arteries based on mathematical morphology" BIOMEDICAL IMAGING: FROM NANO TO MACRO, 2008. ISBI 2008. 5TH IEEE INTERNATIONAL SYMPOSIUM ON, IEEE, PISCATAWAY, NJ, USA, 14 May 2008 (2008-05-14), pages 1059-1062, XP031271226 ISBN: 978-1-4244-2002-5**

• **NAEGEL B, RONSE C, SOLER L: "Using Grey Scale Hit-Or-Miss Transform for Segmenting the Portal Network of the Liver" MATHEMATICAL MORPHOLOGY: 40 YEARS ON - PROCEEDINGS OF THE 7TH INTERNATIONAL SYMPOSIUM IN MATHEMATICAL MORPHOLOGY, vol. 30, 18 April 2005 (2005-04-18), - 20 April 2005 (2005-04-20) pages 429-440, XP9133501 ISSN: 1381-6446 DOI: 10.1007/1-4020-3443-1_39**

• **PASSAT N ET AL: "Magnetic resonance angiography: From anatomical knowledge modeling to vessel segmentation" MEDICAL IMAGE ANALYSIS, OXFORD UNIVERSITY PRESS, OXOFRD, GB LNKD- DOI: 10.1016/J.MEDIA.2005.11.002, vol. 10, no. 2, 1 April 2006 (2006-04-01), pages 259-274, XP025154083 ISSN: 1361-8415 [retrieved on 2006-04-01]**

EP 2 357 609 B1

- PASSAT N ET AL: "Automatic Parameterization of Grey-Level Hit-or-Miss Operators for Brain Vessel Segmentation" 2005 IEEE INTERNATIONAL CONFERENCE ON ACOUSTICS, SPEECH, AND SIGNAL PROCESSING (IEEE CAT. NO.05CH37625) IEEE PISCATAWAY, NJ, USA, IEEE, PISCATAWAY, NJ LNKD- DOI:10.1109/ICASSP.2005.1415510, vol. 2, 18 March 2005 (2005-03-18), pages 737-740, XP010790745 ISBN: 978-0-7803-8874-1
- Mabrouk M S, Solouma N H, Kadah Y M: "Survey of Retinal Image Segmentation and Registration" GVIP Journal vol. 6, no. 2, September 2006 (2006-09), pages 1-11, XP002582208 Retrieved from the Internet: URL:http://www.icgst.com/ gvip/Volume6/Issu e2/P1150628004.pdf> [retrieved on 2010-05-11]
- SERRA J ED - SERRA J: "Image analysis and mathematical morphology, Passage" 1 January 1990 (1990-01-01), IMAGE ANALYSIS AND MATHEMATICAL MORPHOLOGY, ACADEMIC PRESS, GREAT BRITAIN, PAGE(S) 43 - 59 , XP002507062 ISBN: 9780126372403 * the whole document *

## Description

### Field of the invention

The general field of the invention relates to, without being limited to, medical imaging. It finds applications for the segmentation and identification of complex structures such as vessels structures in volumetric images (3D images) generated by any suitable imaging technique such as computed tomography, resonance magnetic imaging or the like.

### Background of the invention

Medical imaging systems such as Computed Tomography (CT) or Magnetic Resonance Imaging (MR) produce volumetric images or 3D images of complete portions of the patient. The data is usually acquired in the form of 2D images representing the successive slices of a 3D volume. The data can be stored in standard file formats such as DICOM, to be subsequently used in various fashions depending on the application.

Segmentation techniques are widely used to extract from these volume of data specific organs or part of organs, in order to obtain 3D representations of these organs separated from the surrounding. These representations are very useful for the purposes of direct medical examination, as well as modeling and/or calculations.

As visualization of vessels or flowing blood constitute an important issue in medical imaging, both CT and MRI have been adapted to enable a correct representation of vascular structures, through techniques such as Computed Tomography Angiography (CTA) and Magnetic Resonance Angiography (MRA) for instance.

Segmentation of vessels is also of particular interest but represents a particularly difficult task because of the complex and entangled shapes of the vessel trees and the numerous bifurcations.

For instance, an efficient 3D reconstruction (i.e. segmentation and 3D surfacic visualization) of coronary arteries from angiograms can lead to higher efficiency and reproducibility in the diagnostic and the quantification of severity of diseases such as atherosclerosis.

Another prominent application is the 3D reconstruction of the vessel network in the liver, for the assessment of morphology and branching pattern of hepatic vasculature is of the highest importance in liver surgery for instance (removal of non healthy segments to prevent tumor proliferation ...). This vessel network is however very complex and difficult to segment.

Among existing segmentation techniques, the ones based on the grey level Hit-or-Miss Transform (HMT) have proven a good efficiency. The binary HMT represents the expression in mathematical morphology of the notion of template matching and is often applied in shape recognition. It is a mathematical morphology operator that uses a set of Structuring Elements (SE) **Eh** and **Em.** The operation is made by testing two conditions: **Eh** has to belong to the object while **Em** has to belong to the background.

The document by Naegel B., Passat N., and Ronse, C., "Grey-level hit-or-miss transforms-part Part I: Unified theory", Pattern recognition vol. 40, pp. 635-647, 2007 disclosed a theory of the application of the HMT to the images in grey levels.

The document by Naegel B, Passat N, and Ronse C., "Grey-level hit-or-miss transforms-part II: Application to angiographic image processing", Pattern recognition, vol. 40, pp. 648-658, 2007 discloses applications of that grey-level HMT to the segmentation of vessels in the portal network in the liver, and in the brain. The document discloses a method using the HMT as a heuristic criterion for a region-growing segmentation. The region-growing segmentation consists in starting from a seed point or a seed region which is assumes to belong to the object, and iteratively adding points of the image to that seed, until obtaining the whole structure to be segmented. However, the structuring elements used in the HMT are mostly matched to vessels with diameters in a given range, because of their fixed radii. As a result, the segmentation method identifies only a part of the branches of the vessel tree, featuring the vessel whose diameters are better matched to the structuring elements.

The document by Naegel B., Ronse C., and Soler L., "Using grey-scale hit-or-miss transform for segmenting the portal network of the liver", Mathematical Morphology, vol. 40, pp.429-440, 2005, discloses also a method using the grey-level HMT for the segmentation of vessels in the portal network in the liver, using the HMT as a heuristic criterion for a region-growing segmentation. In this document, the seed point from which the region-growing segmentation process is started is automatically detected also by means of a grey-level HMT, but using a strong a-priori morphological knowledge to detect the entrance of the portal vein. So the improvement in terms of automation is only applicable in restricted places. And again, the structuring elements used in the HMT for the region-growing segmentation process are mostly matched to vessels with diameters in a given range.

The same comments apply to the document by Bouraoui B., Ronse C., Baruthio J. Passat N. and Germain P., "Fully automatic 3D segmentation of coronary arteries based on mathematical morphology", international symposium on biomedical imaging (ISBI), 2008, which discloses an application of the HMT to the segmentation of the coronary arteries, starting with a automatic detection of the aorta using strong anatomical a-priori knowledge.

The purpose of the invention is to propose a method for the segmentation of vessels in medical 3D images, robust to noise and allowing segmentation of vessels trees even with complex branching and large variety of vessels diameters.

**Summary of the invention**

In order to reach that objective, the invention proposes a method for segmenting a vessel tree in 3D medical images, comprising steps of:

- defining an initial seed corresponding to a first identified point, said seed being a point within a 3D image corresponding to a vessel,
- performing region-growing segmentation by iteratively (i) identifying points in a neighborhood of previously identified points which belong to vessels by using an identification criterion based on the application of a grey-level Hit-or-Miss Transform (HMT) with a set of structuring elements of a template size, and (ii) adding said identified points to said segmented vessel tree,

wherein said region-growing segmentation is repeated iteratively for different template sizes.
According to various embodiments:

- The identification criterion may comprise a comparison between an intensity offset calculated by applying the grey-level Hit-or-Miss Transform (HMT) and a predefined threshold;
- The template size may be initially defined so that the set of structuring elements is substantially matched to the size of the vessel around the seed, and is substantially decreased with region-growing segmentation iterations;
- The template size which is used for one region-growing segmentation iteration may be calculated using results of an application of the grey-level Hit-or-Miss Transform during at least one previous region-growing segmentation iteration;
- The set of structuring elements may comprise a hit element of substantially spherical shape, and a miss element comprising four substantially spherical smaller subparts located in a median plane of the hit element, equidistant from the center of the hit element and having an angular separation of 90° between them;
- The step of changing said template size may comprise changing the distance between the subparts of the miss element, and proportionally changing the diameter of the hit element;

According to an aspect, the method of the invention may further comprise the steps of:

- generating positions of the structuring elements as floating point indices in the 3D image and scaling them in distance units using the voxel size, and
- calculating intensity values at said positions of the structuring elements using an interpolation between the values of the nearest neighboring voxels of the 3D image.

According to another aspect, the method of the invention may further comprise steps of:

- applying a low-pass filter to the voxels of the 3D image when they are read for a first time so as to calculate low-pass filtered values of said voxels, and
- storing said low-pass filtered values for later use.

The low-pass filter may comprise a three dimensional convolution with a kernel of one of the following type: Gaussian, spherical.
The method of the invention may further comprise a step of selecting the low-pass filter automatically, using at least one of the following information:

- a measurement of the 3D image noise,
- "reconstruction kernel" and/or the "manufacturer" fields in the DICOM data of the 3D image.

According to another aspect, the method of the invention may further comprise steps of:

- starting from an initial seed point, calculating intensity offsets for points surrounding said initial seed, by applying a grey-level Hit-or-Miss Transform (HMT) with a set of structuring elements (1, 2) of a template size,
- calculating said intensity offsets for said surrounding points, for several template sizes within a predefined range,

4

- identifying a point with the maximum value of intensity offset, and
- defining said identified point as the seed point.

The method of the invention may also further comprise steps of:

- iteratively calculating at the seed point intensity offsets, by applying a grey-level Hit-or-Miss Transforms (HMT) with a set of structuring elements (1, 2) of a template size, said template size being varied with iterations,
- identifying the maximum value of intensity offset among the calculated values, and
- defining the threshold used in the identification criterion as being said maximum value of intensity offset divided by a factor in the order of 2 to 4.

The method of the invention may also further comprise steps of:

- identifying the optimal template size corresponding to the maximum value of intensity offset at the seed point, and
- using this optimal template size as the first template size for the region-growing segmentation.

It is a further object of the invention to provide a computer program implementing the method.

So the method of the invention, also called the Adaptive Hit-and-miss Region Growing method allows robustly segmenting various vessels, usually injected with contrast products, in 3D computed tomography and magnetic resonance medical images.

The method is semi-automatic in the sense that it segments a given vessel or vessel tree from a seed point placed by the user anywhere in the vessel.

The method of the invention takes advantage of the robustness of the prior art hit-and-miss region growing method, which accounts for the tubular shape of the vessels, but improves it in several way so as to be more robust to the noise in the 3D images and to accommodate in a much better way the natural changes of size in the blood vessel.

The gains in versatility and robustness are mostly resulting from the following features of the invention:

- the adaptive template size,
- the sparse pre-filtering for noise reduction,
- the seed point optimization and automatic vessel size detection,
- the metric-size structuring elements,

These features are of varying importance depending on the type of vessel to be segmented:

- The adaptive template size is of great importance for vessel types where the size of the vessel changes greatly between the proximal and the distal portion of the vessel. This is the case for the liver vessels, or the vessels in the lung;
- The pre-filtering is very important in exams which have a small intensity (or grey level) offset between the vessel and the surrounding tissues, as is often the case in weakly injected computed tomography exams;
- The seed point optimization and vessel size detection is important for cases where the size of the vessel to be segmented is not known in advance, such as in algorithms designed to segmenting many different types of vessels with the only input being a single seed point placed by the user;
- The metric-sized structuring elements increase the precision of the hit-and-miss growing especially when segmenting vessels which are only a few voxels wide, by decreasing the effects of voxel position quantization.

It is an advantage of the method of the invention that it can easily be adapted for the segmentation of various vessel types by defining the range of vessel sizes that can be segmented and whether the vessel size is allowed to, for example, only decrease from the seed point location. So the method can be easily adapted to work optimally for various vessel types, such as the liver vessels, or aortic blood vessels.

## Description of the drawings

The methods according to embodiments of the present invention may be better understood with reference to the drawings, which are given for illustrative purposes only and are not meant to be limiting. Other aspects, goals and advantages of the invention shall be apparent from the descriptions given hereunder.

- Figure 1 shows an overview of the steps of the method of the invention,
- Figure 2 shows structuring elements with various orientations. The figure is reprinted from Bouraoui et al., "Fully automatic 3D segmentation of coronary arteries based on mathematical morphology";

- Figure 3 shows the matching of a structuring element with a vessel;
- Figure 4 shows the matching of vessels with structuring elements in 3D;
- Figure 5 shows metric-sized structuring elements (b) compared to classical pixelized structuring elements (a);
- Figure 6 shows the effect of pre-filtering on the noisy images;
- Figure 7 shows the result of the segmentation of a liver portal tree with the method of the invention.

**Detailed description of the invention**

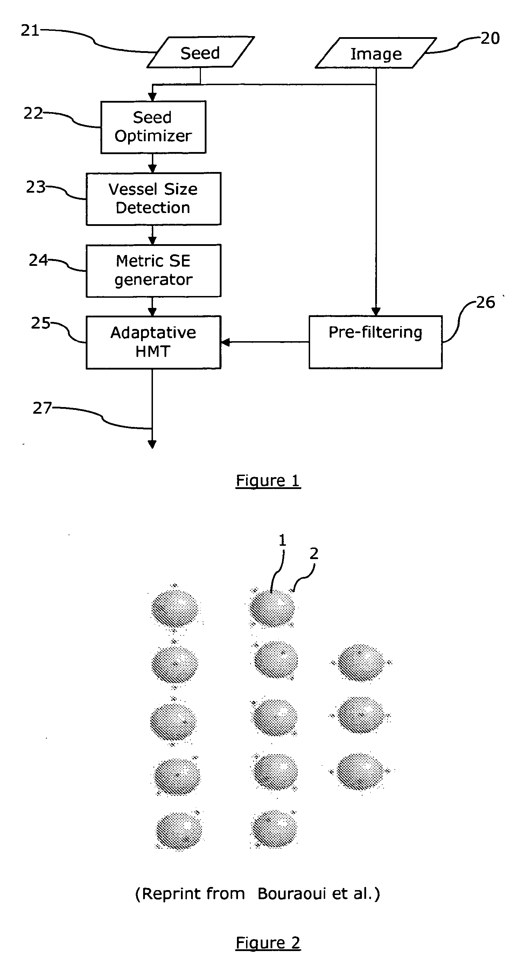

With reference to figure 1, the method of the invention comprises several steps which will be explained in the following.

The method uses as an input the data provided by a 3D image 20, for instance of a vessel system injected with a contrast product and imaged by a computed tomography scanner or magnetic resonance imaging device. Without any intention to be limitative, the description of the invention is illustrated by an application on the liver because it is a complex vessel system whose segmentation is difficult but important for medical applications.

The vessel system is segmented and reconstructed from a starting point or seed 21. This seed is a point which is manually selected by the used, for instance by clicking with a mouse on a point of the 3D image 20. It is a deliberate choice (with contrast for instance to prior art methods identifying a specific morphological feature such as the portal vein in the liver) to leave the selection of this point a manual operation so that the method of the invention can remain very versatile, and be easily applied to various vessel systems with minimum adjustment.

However, as the seed point must correctly be placed on a vessel for proper operation, its location is in fact optimized by the method during step 22, in the vicinity of the location selected by the user. This step 22 will be developed later.

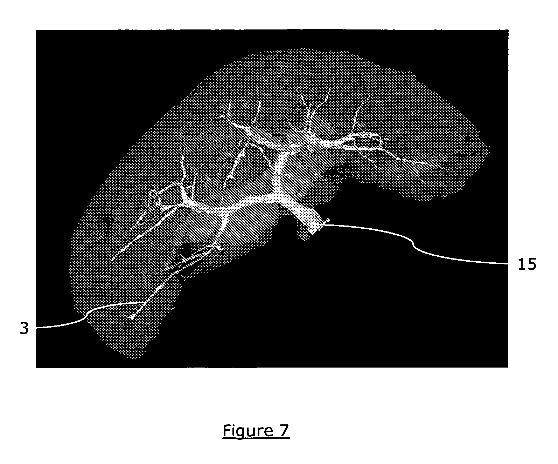

The output 27 of the method is the segmented vessel tree 15 which can be for instance displayed with the surrounding 3D image as shown in figure 7, or used for modeling and calculations.

The core of the method is the adaptive Hit-or-Miss Region growing Algorithm corresponding to step 25. The points belonging to the vessels are identified by applying a Hit-or-Miss criterion. If the criterion turns out to be fulfilled, the corresponding point is added to a list of points corresponding to the vessels, or Segmented Region of Interest (Segmented ROI).

The Hit-or-Miss criterion can advantageously be based on a Grey-Level Hit-or-Miss Transform (GL-HMT), such as disclosed for instance in the document by Naegel B., Passat N., and Ronse, C., "Grey-level hit-or-miss transforms-part Part I: Unified theory", with no intention to be limitative.

With reference to figure 2, The HMT is a mathematical morphology operator that uses a set of Structuring Elements (SE) **Eh** 1 and **Em** 2. The operation is made by testing two conditions: **Eh** has to belong to the object while **Em** has to belong to the background. In the GL-HMT, **Eh** and **Em** are assigned grey levels which are taken into account in the test. The set of structuring elements **Eh** and **Em** is also referred to as the Hit-or-Miss template, or simply the template.

The criterion for adding a voxel position of the 3D image to the Segmented ROI corresponding to the vessel points uses an intensity offset value which is calculated by applying a Hit-or-Miss template at that location. The template defines "hit points" **(Eh,** 1) and "miss points" **(Em,** 2). The hit 1 and the miss points 2 are locations in the image data which are defined as spatial offsets from the candidate voxel position (on which the template is centered). The maximal intensity offset **Ioffset** at a given candidate position for a given structuring element is calculated by the following equation:

$$\mathbf{Ioffset} = \min( \mathbf{I}(\in \mathbf{Eh}) ) - \max( \mathbf{I}(\in \mathbf{Em}) ),$$

where **I**($\in$ **Eh**) is the intensity of the 3D image points at the locations 1 defined by the hit points **Eh,** and **I**($\in$ **Em)** the intensity of the 3D image points at the locations 2 defined by the miss points **Em.** The intensity is calculated taking into account numerical value assigned to the points of the 3D image, such as grey levels, and also possibly taking into account grey levels assigned to the elements **Eh** and **Em.**

To test whether a point should be added to the Segmented ROI, the maximal intensity offset **Ioffset** is calculated for several sets of structuring elements all centered at the point, all of which are identical but with a different rotation (figure 2). The final intensity offset is the maximum of all the **Ioffset** at the candidate location. If the final intensity offset is larger than a predefined threshold **Ithresh,** the candidate point is added to the Segmented ROI.

The set of structuring elements used for the segmentation is chosen so that to be adapted to the structure to extract in the segmentation. Such a set is shown on figure 2, for various orientations. The **Eh** element 1 is substantially spherical and centered on the point of the 3D image under test, while the **Em** element 2 comprises four smaller substantially spherical parts located in a median plane, equidistant from the center of **Eh** and with an angular separation of 90° between them. This set of structuring elements is a preferred one, but of course others may be used within the scope of the invention.

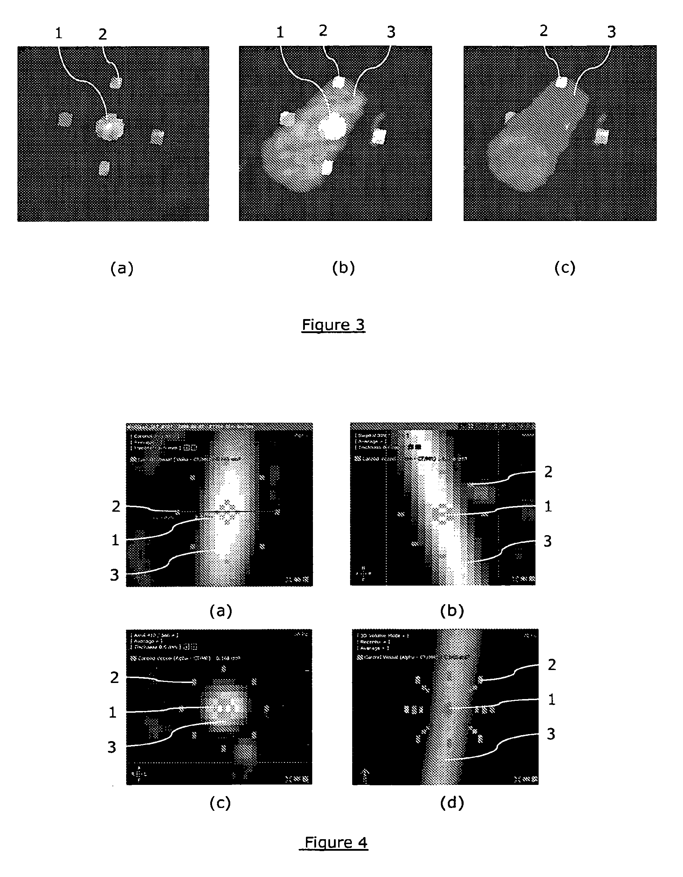

Figure 3 shows how the structuring elements match to a vessel section. Figure 3(a) shows the set of structuring elements **Eh** 1, and **Em** 2, centered on a candidate point. As shown in figure 3(b), if the candidate point belongs to a vessel 3 whose section is compatible with the set of structuring elements 1, 2, and if the structuring elements set it properly oriented, then the hit element 1 **Eh** corresponds mostly to voxels inside the vessel, the miss element 2 **Em** corresponds to voxels outside the vessel, and the final intensity offset **Ioffset** is above the predefined threshold. The candidate point is added to the Segmented ROI, while the orientation of the set of structuring elements gives an indication on the orientation of the vessel section (figure 3(c)).

The diameter of the hit-elements 1 **Eh** roughly represents the minimum width of the vessel that is segmented while the diameter of the miss-elements 2 **Em** (that is the distance between two facing elements of **Em)** roughly represents the maximum width of the vessel that is segmented. So the offset between the two diameters represents the range of sections of vessel which are searched for segmentation.

Figure 4 shows the overlay of the 18 different rotations of a structuring element set 1, 2 used in the method of the invention, at one location belonging to a vessel 3. Figures 4(a), 4(b) and 4(c) are slice views from three orthogonal directions while figure 4(d) is a 3D view.

In a preferred embodiment, once the segmentation process itself is completed, that is when all the candidate points fulfilling the selection criterion have been added to the Segmented ROI, a 3D morphologicai dilation operation is applied to the points of the Segmented ROI, with a dilation distance equaling the radius of the hit-element 1 **Eh** with which the points have been selected. This operation allows restoring the proper size of the vessels. It is therefore of advantage to using structuring elements sets with isotropic hit-element 1 **Eh** having the same radius in all directions so that the same dilation operation can be applied to the entire result.

The method of the invention relates to Hit-or-Miss growing methods of the prior art, but brings substantial improvements by introducing an adaptive template size. This allows accommodating variations in the vessel size by adjusting the template size during the segmentation.

In prior art methods where conventional Hit-or-Miss growing methods with structuring elements of constant size are used, only a small part of the vessels are segmented, that is the vessels whose section is compatible with the structuring elements. Trying to increase the range of the vessels segmented by relaxing the Hit-or-Miss criteria (i.e. by decreasing the Hit-Miss offset or having a larger diameter difference between the hit element 1 and the miss element 2), would lead to leaks into adjacent non-vessel structures.

Therefore, in order to account for the characteristics of blood vessels, the method of the invention uses a Hit-or-Miss growing approach which performs subsequent growing steps at the candidate points using structuring elements (templates) which decreases and/or increases in size at each step. This allows segmenting the whole range of the vessel tree, from the large portal entry to the small distal branches, and avoiding leaking into adjacent vessel trees. This allows also segmenting and identifying vessels with unexpected size variation due for instance to aneurisms or stenosis.

In other words, a hit-and-miss growing is performed on a set of candidate points with a given template size until the growing algorithm stops.

The candidate points are the points surrounding the already identified points (starting from the seed). When a point is identified and added to the Segmented ROI, all its surrounding points which are not already candidate or in the Segmented ROI are added to the candidate points.

The stop condition can be for instance that no more candidate points can be added to the Segmented ROI. The template size is then increased or decreased and the growing algorithm restarted with all the candidate points which were discarded in the previous growing step. And so the template size is adjusted and the growing algorithm restarted until no more voxels can be segmented.

The new template size may be calculated using information obtained during the previous iteration. For instance, if for some candidate points the whole template were completely included in the vessel (including **Em** 2), it is an indication that the template size must be increased. For the segmentation of some vessel types, the template size may only be decreased in size accounting for the unique topology of the vessels. Or it is possible to restrict the change in template size to a pre-defined range in order to avoid segmenting branching vessels or parts of the vessels which vary too much in size. The definition of the template size and how it is allowed to change depends on the specific application of the algorithm, which makes the algorithm very versatile and adaptable.

According to a preferred embodiment, the change of the template size consists in changing in the same proportion the diameter of the hit element 1 **Eh** and the diameter of the miss element 2 **Im** (that is the distance between two of its opposite elements). So, in contrast with prior art method, the diameters of the two elements remain proportional and the Hit-or-Miss criterion is not relaxed.

According to another aspect 24 of the invention, the positions of the sets of structuring element 1, 2 are defined as floating point indices (in the coordinate system of the 3D image) rather than voxel-sized displacements like in the previous art and are scaled in each dimension according to the voxel size. In other words, the locations of the structuring elements are given in distance units such as metric units.

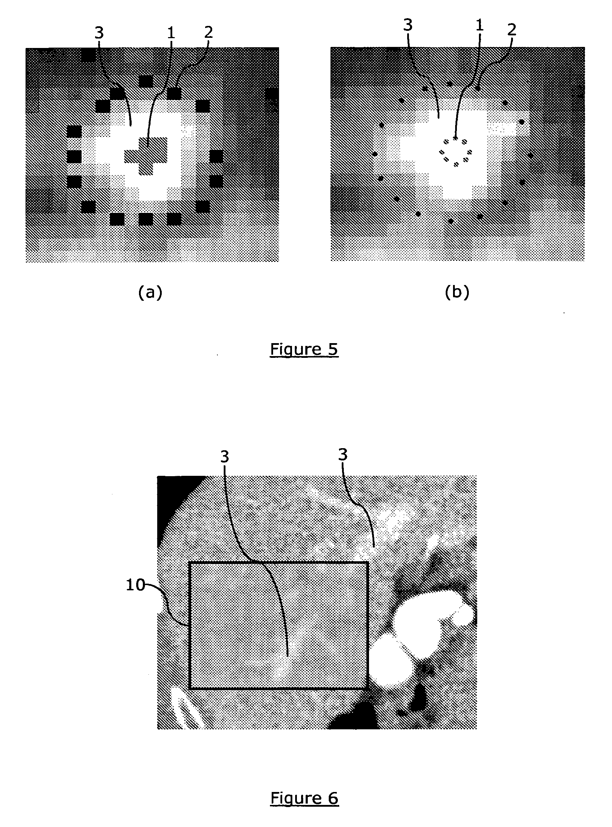

At the moment of applying the structuring elements to the 3D image, the underlying intensity is calculated for each floating point index value using a trilinear interpolation between the values of the nearest eight neighboring voxels. The figure 5 shows the difference between structuring elements given in voxel offsets (figure 5(a)) and metric offsets (figure 5(b)). The metric structuring elements bring several improvements:

- It avoids quantization noise effects arising when converting a smooth structuring element (such as the circular one shown in the figure 5) to a quantized representation,
- It gives more precise hit-and-miss offsets **Ioffset** by taking into account a finer localization of the structuring element 1, 2 and by calculating a more precise value with the trilinear interpolation,
- It allows the structuring elements 1, 2 to be increased or decreased in size without consideration for the voxel size,
- It allows using the same structuring elements on 3D images with different voxel sizes, and still obtaining consistent and directly comparable results.

According to another aspect 26 of the invention, it has been observed that the algorithm does not perform as well as expected on weakly injected exams where the contrast between the vessels 3 and the parenchyma is not strong, even when the vessels 3 can still be clearly discerned by the human viewer when inspecting the exam on the basis of the 3D image. Only when viewing the vessels at large magnifications do discerning them become difficult. It can therefore be inferred that the ability of the human reader to discern the vessels at lower zoom levels is due to the natural filtering of the voxels by the human eye (and brain). Experimental results confirm this. With reference to figure 6, after applying a filtering to part 10 of the dataset slice, it can be seen that that the vessels 3 are more easily discernable in the filtered part 10 of the image. This result implies that better results can be obtained by pre-filtering a noisy image with a low-pass filter to eliminate speckle noise and augment the visibility of the vessels 3.

The Hit-or-Miss growing algorithm relies on the use of the intensity offset of the hit values with regard to the miss values as a criterion for adding a voxel to the segmented region. An outlier voxel located inside the vessel 3 with an intensity close the intensity of the parenchyma therefore can lead to the rejection of vessel voxels in the growing step, even though all the remaining voxels inside the hit template have much higher values.

In order to avoid this kind of "sabotage" of the growing algorithm by voxel outliers caused by noise, a low-pass filter can be used to effectively eliminate these outliers. The loss in detail in the image is not much of concern as long as intensities inside the vessel 3 are still greater than the intensities of the surrounding parenchyma. The low-pass filter just needs to be with a kernel size large enough to eliminate noise but small enough to preserve the visibility of the vessels.

One way to implement the voxel filtering would be to create a copy of the entire exam, pre-filter it and use it as the basis for the segmentation. The problem with this is that creating a copy of the entire exam would use too much memory and pre-filtering the entire exam would be too time consuming. The filtering operation can also not be limited to the region around the organ because the user has in the general case no knowledge about the size and location of that organ at the beginning of the segmentation.

According to a preferred embodiment avoiding the above problems, the voxel reading function is overridden so that the voxels are filtered on the fly when they are read by the segmentation algorithm. In this way only the voxels read by the segmentation algorithm are filtered. Since voxels are usually read multiple times by the segmentation algorithm, an additional caching memory is used to store the filtered values after the initial time that they are calculated. This approach allows avoiding filtering all the voxels in the image.

For each point of the 3D image to be checked, the steps are as follows:

- a filtered voxel value is calculated from the original exam data (3D image);
- Each of the voxels read in the trilinear interpolation is filtered using a low-pass filter. The first time it is read, the filtered value is stored in a cache memory for use in successive readings;
- To evaluate a hit-miss template, for each point of the template, the underlying intensity in the 3D image is found. Since the template point is given in distance units, its intensity value is interpolated from the 8 neighboring voxels using trilinear interpolation;
- To calculate the hit-miss offset **Ioffset,** the hit-miss templates (one template in each possible rotation) are applied at the point;
- The point is added to the Segmented ROI if its hit-miss offset **Ioffset** is above a predetermined threshold.

The amount of filtering is important to the result. Not enough filtering will mean that the noise inhibits the region growing, whereas too much filtering can erase small vessels or erase too much of the morphological information.

The filters are advantageously based on a 3-dimensional spherical convolution kernel or a Gaussian kernel. To keep the results consistent for various resolutions, the size of the kernel is given in size units (i.e. the kernel can be non-isotropic in terms of voxel size for non-isotropic volumes).

Preferred filter values are as follows:

| Filter Kernel | Kernel radius (in mm) |
|---|---|
| Spherical kernel (soft) | 1.5 |
| Spherical kernel (hard) | 2.1 |
| Gaussian kernel (soft) | 0.7 |
| Gaussian kernel (hard) | 1.0 |

It is to notice that these kernel diameters correspond approximately to one voxel on each side of the central voxel in standard resolution computed tomography exams.

The selection of filters depends on the origin of the data. Gaussian kernels are used by default. Due the differences in the reconstruction kernels used by various device manufactures of CT scanners, the resulting exams from the respective manufacturers exhibit more or less noise (different amounts of smoothing). It is therefore better to apply a slightly weaker pre-filtering to exams which are already smoothed by the device, and more filtering to exams which are less smoothed and therefore more noisy. So two engines with different kernel size are implements by default, and called "soft" and "hard". Selection of filter can be done as follows:

- manually, selected by the user,
- automatically, based on the measurement of the image noise, for instance by using the standard deviation of the intensities at well defined places in the exam, and selection of the optimal filter accordingly,
- automatically, using the "reconstruction kernel" and "manufacturer" fields in the DICOM data of the exam.

According to another aspect, the method of the invention comprises a seed point optimization 22.

When the user chooses the location of the seed point, by clicking for instance on the vessel 3, the seed point is not necessarily well centered in the vessel 3. This can have a detrimental effect on the segmentation, especially in the case where the segmentation algorithm 25 is automatically initialized 24 using vessel type and characteristics detected at that seed point. It is therefore beneficial to first correct the seed point to ensure that it is located exactly in the center of the vessel 3.

The optimal seed point is found by doing a 3D search around the seed point selected by the user with a given structuring element set, in order to find for which displacement the best match is obtained. The best match is defined as the displacement where the hit-miss offset is the largest. Because the size of the vessel is unknown, the search has to be performed for a range of different structuring element sizes. The final optimal seed point corresponds to the point with the largest hit-min offset for the entire range of structuring element sizes.

According to another aspect, the method of the invention comprises a detection of vessel characteristics 23.

The idea is that characteristics of the vessel 3 at the seed point location may be similar to characteristics of the vessel that the user intends to segment as a whole. Besides freeing the user from having to choose a given ROI type corresponding to the vessels he/she wants to segment, the parameter detection eliminates problems due to variations of vessel size for a given vessel type or problems of weak injection. For example, the usual parameters given to segment an aorta might not be valid in cases where the aorta is unusually small and/or when the injection is very weak. The method of the invention allows adapting the parameters to accommodate any kind of dataset and vessel.

The algorithm determines the following properties:

- The optimal structuring element template size (i.e. the vessel radius )
- The optimal hit-miss intensity offset (i.e. the vessel to background contrast).

The detection of the parameters works by iteratively applying a structuring element set of changing size at the selected seed point. Once the iterations have been completed over all possible sizes, the optimal structuring element size is defined as the size where the structuring element set exhibits the largest hit-miss offset. The optimal hit-miss intensity offset is considered as the offset which corresponds to the structuring element of the optimal size. This value is then divided by a given factor, so as to allow for some flexibility for variations in the rest of the vessel. The factor is usually around 2 to 4.

The components of the adaptive hit-and-miss region growing method of the invention can be chosen and adjusted based on the type of vessel that should be segmented. Depending on the vessel type, the user can choose components to use in the algorithm and perform minor adjustments. Below are two examples of the how the algorithm is applied to two different vessels types.

Application to hepatic vessel segmentation.

The hepatic vessels (portal and hepatic vessel trees) are unique in that the vessels decrease dramatically in size and that in most cases it is desired to segment only one vessel tree at a time, even though the portal and the hepatic vessels are often in close proximity at the distal parts of the vessel trees.

Because the user starts the segmentation by clicking on the entry of the tree, which is the largest part of the vessel, the hit-and-miss growing is performed with a decreasing template size only. The decreasing template size prevents the region-growing from segmenting large parts of adjacent touching vessel trees, because these vessels usually increase in size from the point where the two vessels touch.

On the other hand, detection of the vessel size is not necessary because the portal and hepatic entry do not usually vary much in size and the starting template size can therefore be set statically.

To summarize, for the hepatic vessel segmentation, the adaptations of the method are as follows:

- the vessel size detection 23 is not used,
- the region-growing segmentation 25 is repeated iteratively for template sizes that decrease with iterations.

Figure 7 shows the result of the segmentation of the portal tree 15.

Application to generic vessels segmentation

The generic vessel segmentation method aims at being generic enough so that most standard injected vessels in CT or MR exams can be segmented with one click. The particularity of this task is that neither the contrast of the vessel to be segmented nor the size of the vessel is known. For this task the vessel size detection 23 is therefore a crucial step before performing the hit-and-miss growing 25. Additionally, the template size is both increased and decreased between subsequent growing steps, since the user is not expected to click at the largest part of the vessels. This also helps to accommodate aneurysms and stenosis in the vessel.

The method of the invention is not limited to the segmentation of blood vessels, but can be applied to the segmentation of any relevant structure using any 3D data without being out of the scope of the invention.

While this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the scope of the appended claims.

**Claims**

1. A method for segmenting a vessel tree in 3D medical images, comprising steps of:

   - defining an initial seed corresponding to a first identified point, said seed being a point within a 3D image corresponding to a vessel (3),
   - performing region-growing segmentation by iteratively (i) identifying points in a neighborhood of previously identified points which belong to vessels (3) by using an identification criterion based on the application of a grey-level Hit-or-Miss Transform (HMT) with a set of structuring elements (1, 2) of a template size, and (ii) adding said identified points to said segmented vessel tree (15), **characterized in that** :

   said region-growing segmentation is repeated iteratively for different template sizes.

2. The method of claim 1, wherein the identification criterion comprises a comparison between an intensity offset calculated by applying the grey-level Hit-or-Miss Transform (HMT) and a predefined threshold.

3. The method of claim 1 or 2, wherein the template size is initially defined so that the set of structuring elements (1, 2) is substantially matched to the size of the vessel (3) around the seed, and is substantially decreased with region-growing segmentation iterations.

4. The method of any of the preceding claims, wherein the template size which is used for one region-growing segmentation iteration is calculated using results of an application of the grey-level Hit-or-Miss Transform during at least one previous region-growing segmentation iteration.

**5.** The method of any of the preceding claims, wherein the set of structuring elements comprises a hit element (1) of substantially spherical shape, and a miss element (2) comprising four substantially spherical smaller subparts located in a median plane of the hit element (1), equidistant from the center of the hit element (1) and having an angular separation of 90° between them.

**6.** The method of claim 5, wherein the step of changing said template size comprises changing the distance between the subparts of the miss element (2), and proportionally changing the diameter of the hit element (1).

**7.** The method of any of the preceding claims, further comprising the steps of:

- generating positions of the structuring elements (1, 2) as floating point indices in the 3D image and scaling them in distance units using the voxel size, and
- calculating intensity values at said positions of the structuring elements (1, 2) using an interpolation between the values of the nearest neighboring voxels of the 3D image.

**8.** The method of any of the preceding claims, further comprising steps of:

- applying a low-pass filter to the voxels of the 3D image when they are read for a first time so as to calculate low-pass filtered values of said voxels, and
- storing said low-pass filtered values for later use.

**9.** The method of claim 8, wherein the low-pass filter comprises a three dimensional convolution with a kernel of one of the following types: Gaussian, spherical.

**10.** The method of Claim 8 or 9, further comprising a step of selecting the low-pass filter automatically, using at least one of the following information:

- a measurement of the 3D image noise,
- "reconstruction kernel" and/or the "manufacturer" fields in the DICOM data of the 3D image.

**11.** The method of any of the preceding claims, further comprising steps of:

- starting from an initial seed point, calculating intensity offsets for points surrounding said initial seed point, by applying a grey-level Hit-or-Miss Transform (HMT) with a set of structuring elements (1, 2) of a template size,
- calculating said intensity offsets for said surrounding points, for several template sizes within a predefined range,
- identifying a point with the maximum value of intensity offset, and
- defining said identified point as the seed point.

**12.** The method of any of the preceding claims, further comprising steps of:

- iteratively calculating at the seed point intensity offsets, by applying a grey-level Hit-or-Miss Transforms (HMT) with a set of structuring elements (1, 2) of a template size, said template size being varied with iterations,
- identifying the maximum value of intensity offset among the calculated values, and
- defining the threshold used in the identification criterion as being said maximum value of intensity offset divided by a factor in the order of 2 to 4.

**13.** The method of the claims 11 or 12, further comprising steps of:

- identifying the optimal template size corresponding to the maximum value of intensity offset at the seed point, and
- using this optimal template size as the first template size for the region-growing segmentation.

**14.** Computer program implementing the method of any of the preceding claims.

**Patentansprüche**

**1.** Verfahren zur Segmentierung eines Gefäßbaumes in medizinische 3D-Bilder, das die folgenden Schritte umfasst:

- Festlegen eines Startparameters, der einem ersten ermittelten Punkt entspricht, wobei es sich bei dem Startparameter um einen Punkt innerhalb eines 3D-Bildes handelt, der einem Gefäß (3) entspricht,
- Durchführen einer Bereichswachstums-Segmentierung, indem iterativ (i) Punkte in einer Nachbarschaft von zuvor identifizierten Punkten identifiziert werden, die zu Gefäßen (3) gehören, indem ein Identifizierungskriterium verwendet wird, das auf der Anwendung eines Graustufen-Hit-or-Miss Transform (HMT) mit einem Satz von Strukturelementen (1, 2) einer Vorlagengröße basiert, und (ii) die identifizierten Punkte dem segmentierten Gefäßbaum (15) hinzugefügt werden, **dadurch gekennzeichnet, dass**:

die Bereichswachstums-Segmentierung für verschiedene Vorlagengrößen iterativ wiederholt wird.

2. Verfahren nach Anspruch 1, wobei das Identifizierungskriterium einen Vergleich zwischen einer Intensitätsverschiebung (*intensity offset*) umfasst, die durch Anwendung des Graustufen-Hit-or-Miss Transform (HMT) und eines vorbestimmten Grenzwertes berechnet wird.

3. Verfahren nach Anspruch 1 oder 2, wobei die Vorlagengröße zu Anfang festgelegt wird, so dass der Satz an Strukturelementen (1, 2) im wesentlichen an die Größe des Gefäßes (3) um den Startparameter herum angepasst ist, und mit Bereichswachstumssegmentierungs-Iterationen im wesentlichen verringert wird.

4. Verfahren nach einem der vorhergehenden Ansprüche, wobei die Vorlagengröße, die für eine Bereichswachstumssegmentierungs-Iteration verwendet wird, unter Verwendung der Ergebnisse einer Anwendung des Graustufen-Hit-or-Miss Transform (HMT) während mindestens einer früheren Bereichswachstumssegmentierungs-Iteration berechnet wird.

5. Verfahren nach einem der vorhergehenden Ansprüche, wobei der Satz an Strukturelementen ein *Hit Element* (1) von im wesentlichen sphärischer Form aufweist, und ein *Miss Element* (2), das vier im wesentlichen sphärische, kleinere Unterabschnitte umfasst, die sich in einer Medianebene des *Hit Elementes* (1) in gleich weitem Abstand zu der Mitte des *Hit Elementes* (1) befinden und untereinander einen Winkelabstand von 90° aufweisen.

6. Verfahren nach Anspruch 5, wobei der Schritt der Änderung der Vorlagengröße darin besteht, den Abstand zwischen den Unterabschnitten des *Miss Elementes* (2) und den Durchmesser des *Hit Elementes* (1) dem Verhältnis entsprechend zu ändern.

7. Verfahren nach einem der vorhergehenden Ansprüche, das weiterhin die folgenden Schritte aufweist:

- Erzeugen von Positionen der Strukturelemente (1, 2) als Floating Point Indizes in dem 3D-Bild und ihre Skalierung in Entfernungseinheiten unter Verwendung der Voxelgröße, und
- Berechnen der Intensitätswerte an den Positionen der Strukturelemente (1, 2) unter Verwendung einer Interpolation zwischen den Werten des nächstgelegenen, benachbarten Voxel des 3D-Bildes.

8. Verfahren nach einem der vorhergehenden Ansprüche, das weiterhin die folgenden Schritte aufweist:

- Anwenden eines Tiefpassfilters auf die Voxel des 3D-Bildes, wenn sie erstmals abgelesen werden, um die Tiefpassfilterwerte der Voxel zu berechnen, und
- Speichern der Tiefpassfilterwerte zur späteren Verwendung.

9. Verfahren nach Anspruch 8, wobei der Tiefpassfilter eine dreidimensionale Faltung mit einem der folgenden Kerne, Gaußscher Kern oder sphärischer Kern, aufweist.

10. Verfahren nach Anspruch 8 oder 9, das weiterhin einen Schritt der automatischen Auswahl des Tiefpassfilters aufweist, wobei mindestens eine der folgenden Informationen verwendet wird:

- eine Messung des 3D-Bildgeräusches,
- "Rekonstruktionskern" und/oder die "Hersteller"-Felder in den DICOM-Daten des 3D-Bildes.

11. Verfahren nach einem der vorhergehenden Ansprüche, das weiterhin die folgenden Schritte aufweist:

- Beginnen von einem Startparameter aus, Berechnen der Intensitätsverschiebungen für Punkte, die den Startparameter umgeben durch Anwenden eines Graustufen-Hit-or-Miss Transform (HMT) mit einem Satz von Strukturelementen (1, 2) einer Vorlagengröße,
- Berechnen der Intensitätsverschiebungen für die umgebenden Punkte für verschiedene Vorlagengrößen innerhalb eines vorbestimmten Bereichs,
- Identifizieren eines Punktes mit dem Höchstwert der Intensitätsverschiebung und
- Festlegen des identifizierten Punktes als Startparameter.

12. Verfahren nach einem der vorhergehenden Ansprüche, das weiterhin die folgenden Schritte aufweist:

- iterative Berechnung von Intensitätsverschiebungen an dem Startparameter durch Anwenden eines Graustufen-Hit-or-Miss Transform (HMT) mit einem Satz von Strukturelementen (1, 2) einer Vorlagengröße, wobei die Vorlagengröße mit den Iterationen verändert wird,
- Identifizieren des Höchstwertes der Intensitätsverschiebung unter den berechneten Werten, und
- Bestimmen des Grenzwertes, der bei dem Identifizierungskriterium verwendet wird, wobei es sich um den Höchstwert der Intensitätsverschiebung, dividiert durch einen Faktor in der Größenordnung 2 bis 4 handelt.

13. Verfahren nach den Ansprüchen 11 oder 12, das weiterhin die folgenden Schritte aufweist:

- Identifizieren der optimalen Vorlagengröße, die dem Höchstwert der Intensitätsverschiebung am Startparameter entspricht, und
- Verwenden dieser optimalen Vorlagengröße als erste Vorlagengröße für die Bereichswachstums-Segmentierung.

14. Computerprogramm, das das Verfahren eines der vorhergehenden Ansprüche implementiert.

**Revendications**

1. Procédé de segmentation d'un arbre vasculaire dans des images médicales en 3D, comprenant les étapes consistant à :

- définir une graine initiale correspondant à un premier point identifié, ladite graine étant un point au sein d'une image en 3D correspondant à un vaisseau (3),
- réaliser une segmentation par croissance de région en effectuant de manière itérative (i) une identification de points dans un voisinage de points antérieurement identifiés qui appartiennent à des vaisseaux (3) en utilisant un critère d'identification basé sur l'application d'une transformée en tout ou rien (HMT) en niveaux de gris avec un jeu d'éléments structurants (1, 2) d'une taille de modèle, et (ii) un ajout desdits points identifiés audit arbre vasculaire segmenté (15), **caractérisé en ce que** :

ladite segmentation par croissance de région est répétée de façon itérative pour des tailles de modèle différentes.

2. Procédé selon la revendication 1, dans lequel le critère d'identification comprend une comparaison entre un décalage d'intensité calculé en appliquant la transformée en tout ou rien (HMT) en niveaux de gris et un seul prédéfini.

3. Procédé selon la revendication 1 ou 2, dans lequel la taille de modèle est initialement définie de sorte que le jeu d'éléments structurants (1, 2) est sensiblement mis en concordance avec la taille du vaisseau (3) autour de la graine, et est sensiblement diminuée avec des itérations de segmentation par croissance de région.

4. Procédé selon l'une quelconque des revendications précédentes, dans lequel la taille de modèle qui est utilisée pour une itération de segmentation par croissance de région est calculée en utilisant les résultats d'une application de la transformée en tout ou rien en niveaux de gris pendant au moins une itération de segmentation par croissance de région antérieure.

5. Procédé selon l'une quelconque des revendications précédentes, dans lequel le jeu d'éléments structurants comprend un élément de tout (1) de forme sensiblement sphérique, et un élément de rien (2) comprenant quatre sous-parties plus petites sensiblement sphériques situées dans un plan médian de l'élément de tout (1), à équidistance du centre de l'élément de tout (1) et ayant une séparation angulaire de 90° entre elles.

**6.** Procédé selon la revendication 5, dans lequel l'étape de changement de ladite taille de modèle comprend le changement de la distance entre les sous-parties de l'élément de rien (2), et le changement en proportion du diamètre de l'élément de tout (1).

**7.** Procédé selon l'une quelconque des revendications précédentes, comprenant en outre les étapes consistant à :

- générer des positions des éléments structurants (1, 2) en tant qu'indices à virgule flottante dans l'image en 3D et les mettre à l'échelle en unités de distance en utilisant la taille de voxel, et
- calculer des valeurs d'intensité au niveau desdites positions des éléments structurants (1, 2) en utilisant une interpolation entre les valeurs des voxels voisins les plus proches de l'image en 3D.

**8.** Procédé selon l'une quelconque des revendications précédentes, comprenant en outre les étapes consistant à :

- appliquer un filtre passe-bas aux voxels de l'image en 3D lorsqu'ils sont lus une première fois de façon à calculer des valeurs filtrées passe-bas desdits voxels, et
- stocker lesdites valeurs filtrées passe-bas pour une utilisation ultérieure.

**9.** Procédé selon la revendication 8, dans lequel le filtre passe-bas comprend une convolution tridimensionnelle avec un noyau de l'un des types suivants : gaussien, sphérique.

**10.** Procédé selon la revendication 8 ou 9, comprenant en outre une étape de sélection automatique du filtre passe-bas, en utilisant au moins l'une des informations suivantes :

- une mesure du bruit de l'image en 3D,
- les champs « noyau de reconstruction » et/ou « fabricant » dans les données DICOM de l'image en 3D.

**11.** Procédé selon l'une quelconque des revendications précédentes, comprenant en outre les étapes consistant à :

- en commençant par un point de graine initial, calculer des décalages d'intensité pour des points entourant ledit point de graine initial, en appliquant une transformée en tout ou rien (HMT) en niveaux de gris avec un jeu d'éléments structurants (1, 2) d'une taille de modèle,
- calculer lesdits décalages d'intensité pour lesdits points environnants, pour plusieurs tailles de modèle dans une plage prédéfinie,
- identifier un point ayant la valeur maximale du décalage d'intensité, et
- définir ledit point identifié comme le point de graine.

**12.** Procédé selon l'une quelconque des revendications précédentes, comprenant en outre les étapes consistant à :

- calculer de façon itérative au niveau du point de graine des décalages d'intensité, en appliquant une transformée en tout ou rien (HMT) en niveaux de gris avec un jeu d'éléments structurants (1, 2) d'une taille de modèle, ladite taille de modèle faisant l'objet de variations avec des itérations,
- identifier la valeur maximale du décalage d'intensité parmi les valeurs calculées, et
- définir le seuil utilisé dans le critère d'identification comme étant ladite valeur maximale du décalage d'intensité divisée par un facteur de l'ordre de 2 à 4.

**13.** Procédé selon la revendication 11 ou 12, comprenant en outre les étapes consistant à :

- identifier la taille de modèle optimale correspondant à la valeur maximale du décalage d'intensité au niveau du point de graine, et
- utiliser cette taille de modèle optimale comme la première taille de modèle pour la segmentation par croissance de région.

**14.** Programme informatique implémentant le procédé de l'une quelconque des revendications précédentes.

21 — [Seed]

20 — [Image]

22 — **Seed Optimizer**

23 — **Vessel Size Detection**

24 — **Metric SE generator**

25 — **Adaptative HMT**

26 — **Pre-filtering**

27 —

Figure 1

1
2

(Reprint from Bouraoui et al.)

Figure 2

15

(a)                    (b)                    (c)

Figure 3

(a)                              (b)

(c)                              (d)

Figure 4

(a)                    (b)

Figure 5

Figure 6

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Naegel B. ; Passat N. ; Ronse, C.** Grey-level hit-or-miss transforms-part Part I: Unified theory. *Pattern recognition,* 2007, vol. 40, 635-647
- **Naegel B ; Passat N ; Ronse C.** Grey-level hit-or-miss transforms-part II: Application to angiographic image processing. *Pattern recognition,* 2007, vol. 40, 648-658
- **Naegel B. ; Ronse C. ; Soler L.** Using grey-scale hit-or-miss transform for segmenting the portal network of the liver. *Mathematical Morphology,* 2005, vol. 40, 429-440
- **Bouraoui B. ; Ronse C. ; Baruthio J. ; Passat N. ; Germain P.** Fully automatic 3D segmentation of coronary arteries based on mathematical morphology. *international symposium on biomedical imaging,* 2008